# FASCICULE DE BREVET EUROPEEN

(11) **EP 3 727 915 B1**
(45) Date de publication et mention de la délivrance du brevet: **15.05.2024**
(21) Numéro de dépôt: 18816064.2
(22) Date de dépôt: 13.12.2018
(51) Int. Cl.: B60J 10/23, B60J 10/34, B60J 10/36

(54) **JOINT D'ETANCHEITE POUR VEHICULE AUTOMOBILE COMPRENANT AU MOINS UN CLIP DE FIXATION**
DICHTUNG FÜR EIN KRAFTFAHRZEUG UMFASSEND MINDESTENS EINEN BEFESTIGUNGSCLIP
SEAL FOR AN AUTOMOTIVE VEHICLE COMPRISING AT LEAST ON FASTENING CLIP

(30) Priorité: 20.12.2017 FR 1762575
(43) Date de publication de la demande: 28.10.2020
(73) Titulaire: Renault s.a.s, 92100 Boulogne Billancourt (FR)
(72) Inventeur: COULLEBAUD, Christophe, 77450 CONDÉ SAINT LIBIAIRE (FR); VOIRIN, Michel, 76520 Franqueville saint Pierre (FR); SOULAT, Joelle, 78160 Marly-Le-roi (FR); OUTTIRAPOULLE, Chandar, 78910 BEHOUST (FR)
(74) Mandataire: Renault Group
(86) Numéro de dépôt international: PCT/EP2018/084829
(87) Numéro de publication internationale: WO 2019/121342

(56) Documents cités:
- EP-A1- 1 321 325
- DE-A1-102009 009 283
- DE-A1-102010 054 689
- GB-A- 2 478 637
- JP-A- 2012 086 841
- US-A1- 2001 005 960
- US-A1- 2008 096 003
- US-A1- 2017 021 708

## Description

### Domaine technique de l'invention

La présente invention concerne un joint d'étanchéité annulaire pour une porte d'un véhicule automobile ou pour un encadrement de porte d'un véhicule automobile. L'invention concerne également un procédé de montage d'un tel joint d'étanchéité. Enfin, l'invention concerne un véhicule automobile comprenant un tel joint d'étanchéité.

### État de la technique

Pour réaliser l'étanchéité des portes d'un véhicule, les constructeurs d'automobiles utilisent des joints d'étanchéité annulaire entourant la porte ou entourant un encadrement de porte. Lorsque la porte est fermée, le joint d'étanchéité est à la fois en contact avec la porte et avec l'encadrement de la porte ce qui empêche l'eau de pénétrer dans l'habitacle. Pour fixer, le joint d'étanchéité, on connaît l'utilisation de clips de fixation, solidaires du joint d'étanchéité, et insérés dans des trous prévus à cet effet dans la structure de la porte ou dans la structure de l'encadrement de porte, comme cela est décrit par GB 2 478 637 A et JP 2012 086841 A.

Toutefois, ce type de fixation requiert l'utilisation d'une structure de taille suffisante pour la réalisation du trou et pour accueillir le clip de fixation. La structure est donc volum ineuse ce qui génère des contraintes esthétiques pour la réalisation de la porte ou de l'encadrement de la porte. En particulier, lorsque la porte comprend une vitre, la section du montant entourant la vitre doit donc avoir une taille suffisante et la surface de la vitre est, par conséquent, réduite.

Pour pallier l'utilisation de clips de fixation, on connaît également l'utilisation de joints collés sur la porte ou sur l'encadrement de porte. EP 1 321 325 A1 décrit un joint comportant un ruban adhésif et des clips de fixation. Leur manipulation est cependant délicate et occasionne un risque de salir la colle et/ou de mal positionner le joint lors de son montage sur la porte. Par conséquent, le joint d'étanchéité peut perdre de son efficacité et/ou son aspect esthétique peut être dégradé. Afin d'obtenir un bon positionnement du joint d'étanchéité, on peut recourir à l'utilisation d'un robot automatisé cependant une telle solution est complexe à mettre en oeuvre et requiert beaucoup de place dans un atelier de montage.

### Objet de l'invention

Le but de l'invention est de fournir un joint d'étanchéité et un procédé de montage d'un joint d'étanchéité remédiant aux inconvénients ci-dessus et améliorant les joints d'étanchéité et les procédés de montage de joints d'étanchéité connus de l'art antérieur. En particulier, l'invention permet de réaliser un joint d'étanchéité qui soit robuste et facile à assembler. L'invention se rapport à un joint d'étanchéité annulaire destiné à être fixé à une porte d'un véhicule automobile ou à un encadrement de porte d'un véhicule automobile, le joint d'étanchéité comprenant deux jonctions et deux clips de fixation de part et d'autre des deux jonctions, une première portion comprend au moins un clip de fixation, une pluralité de clips de fixation supplémentaires et aucun moyen adhésif, et une deuxième portion comprend au moins un moyen adhésif, le moyen adhésif s'étend sur toute la longueur de la deuxième portion sous la forme de deux bandes autocollantes uniformes et parallèles l'une à l'autre, les deux jonctions délimitent la première portion de la deuxième portion, la première portion et la deuxième portion formant deux portions complémentaires du joint d'étanchéité, et le joint d'étanchéité comprend un perçage destiné à une mise en dépression du volume contenu entre les deux bandes autocollantes.

La jonction peut être une jonction thermosoudée, notamment les deux jonctions peuvent être des jonctions thermosoudées.

Le moyen adhésif s'étend sur toute la longueur de la deuxième portion.

La première portion peut être destinée à être fixée en dessous de la deuxième portion, sur une porte d'un véhicule automobile ou sur un encadrement de porte d'un véhicule automobile. La deuxième portion peut être destinée à contourner au moins partiellement une vitre d'une porte d'un véhicule automobile. La deuxième portion peut avoir une longueur voisine de la première portion.

Le joint d'étanchéité peut comprendre une bande de protection recouvrant l'au moins un moyen adhésif, notamment une bande de protection munie de languettes de préhension.

Le joint d'étanchéité peut comprendre :
- une section transversale sensiblement constante, et/ou
- une première chambre dont une paroi est destinée à venir au contact d'une porte si le joint d'étanchéité est destiné à être fixé à un encadrement de porte ou à venir au contact d'un encadrement d'une porte si le joint d'étanchéité est destiné à être fixé à une porte, et/ou
- une deuxième chambre dont une paroi supporte l'au moins un clip de fixation et l'au moins un moyen adhésif.

Le procédé de montage d'un joint d'étanchéité tel que défini précédemment peut comprendre:
a) une étape de fixation d'un premier clip de fixation dans un premier trou de la porte,
b) une étape de fixation d'un deuxième clip de fixation dans un deuxième trou de la porte, le premier clip de fixation et le deuxième clip de fixation étant positionnés de part et d'autre d'une première jonction du joint d'étanchéité,
c) une étape de retrait d'une bande de protection protégeant le moyen adhésif,
d) une étape de collage sur la porte d'une première partie de la deuxième portion du joint d'étanchéité avec le moyen adhésif, en appliquant une pression homogène sur le joint au moyen d'un outil d'aide au montage guidant la deuxième portion du joint d'étanchéité afin d'amener cette dernière dans une position prédéterminée sur un bord de porte,
e) une étape de fixation d'un troisième clip de fixation dans un troisième trou de la porte ou dans un troisième trou de l'encadrement de la porte,
f) une étape de fixation d'un quatrième clip de fixation dans un quatrième trou de la porte ou dans un quatrième trou de l'encadrement de la porte, le troisième clip de fixation et le quatrième clip de fixation étant positionnés de part et d'autre d'une deuxième jonction du joint d'étanchéité,
g) une étape de collage sur la porte d'une deuxième partie de la deuxième portion du joint d'étanchéité, complémentaire de la première partie de la deuxième portion du joint d'étanchéité, en appliquant une pression sur le joint au moyen de l'outil,
h) une étape de fixation de clips de fixations supplémentaires agencés dans la première portion du joint d'étanchéité, les étapes étant effectuées dans l'ordre alphabétique de a) jusqu'à h).

L'invention se rapporte également à un véhicule automobile comprenant un joint d'étanchéité tel que défini précédemment.

### Description sommaire des dessins

Ces objets, caractéristiques et avantages de la présente invention seront exposés en détail dans la description suivante d'un mode de réalisation particulier fait à titre non-limitatif en relation avec les figures jointes parmi lesquelles :
La figure 1A est une vue schématique d'un véhicule automobile équipé d'un joint d'étanchéité selon un mode de réalisation de l'invention.
La figure 1B est une vue schématique du véhicule automobile équipé du joint d'étanchéité selon une variante de réalisation.
La figure 2 est une vue schématique du joint d'étanchéité.
La figure 3 est une vue d'une paroi du joint d'étanchéité.
La figure 4 est une vue d'une première section transversale du joint d'étanchéité comportant un moyen de fixation rapide de type clip de fixation.
La figure 5 est une vue d'une deuxième section transversale du joint d'étanchéité comportant un moyen adhésif.
La figure 6 est une vue isométrique d'un clip de fixation du joint d'étanchéité.
La figure 7 est une vue schématique d'une porte au cours d'un procédé de montage du joint d'étanchéité, selon un mode de réalisation.

### Description de modes préférentiels de l'invention

Sur l'ensemble de la description, l'avant et l'arrière sont définis selon le sens de marche d'un véhicule automobile. En marche avant et en ligne droite, le véhicule progresse de l'arrière vers l'avant. D'autre part, on considère que le véhicule repose sur un sol horizontal. Les termes « inférieur » et « supérieur » font référence à un axe vertical.

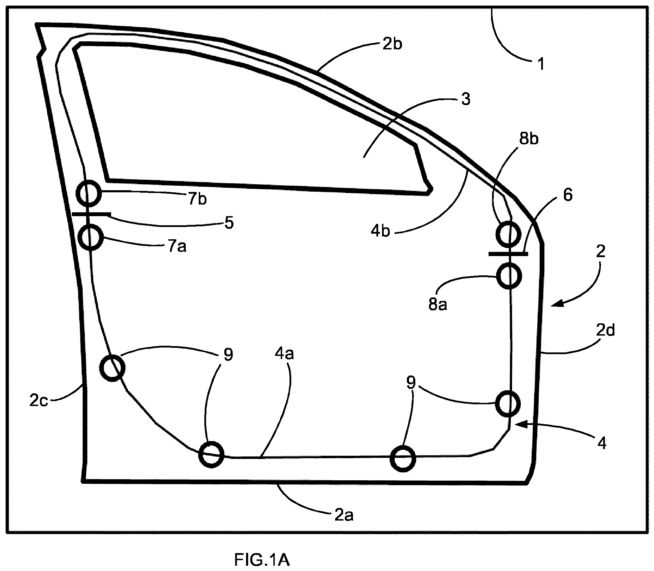

La figure 1A illustre schématiquement un véhicule 1 automobile selon un mode de réalisation de l'invention. Le véhicule 1 peut être par exemple un véhicule particulier, un véhicule utilitaire, voire même un camion ou un bus. Le véhicule 1 comprend au moins une porte 2 permettant d'accéder à un habitacle ou à un coffre du véhicule. La porte 2 peut être une porte latérale avant, une porte latérale arrière ou encore une porte de coffre. La porte 2 peut être mobile entre une position fermée et une position ouverte selon tout type de mouvement, notamment selon un mouvement de rotation autour d'un axe de charnière disposé verticalement sur un coté de la porte. Selon le mode de réalisation présenté, la porte 2 est une porte latérale et elle comprend une vitre 3 agencée dans une partie supérieure de la porte. Elle comprend un bord inférieur 2a, un bord supérieur 2b, un bord latéral arrière 2c et un bord latéral avant 2d. La porte est équipée d'un joint d'étanchéité 4 annulaire fixé à la porte. En variante, le joint d'étanchéité pourrait être fixé à l'encadrement de la porte 2, solidaire d'une caisse du véhicule 1 et la description qui suit pourrait être transposé à ce cas de figure. Le joint d'étanchéité épouse globalement le contour de la porte 2. Notamment, le joint d'étanchéité contourne la vitre 3 et s'étend vers le bas le long du bord inférieur 2a de la porte. La distance séparant le joint d'étanchéité 4 du bord latéral avant, du bord latéral arrière, du bord inférieur ou du bord supérieur de la porte peut être variable.

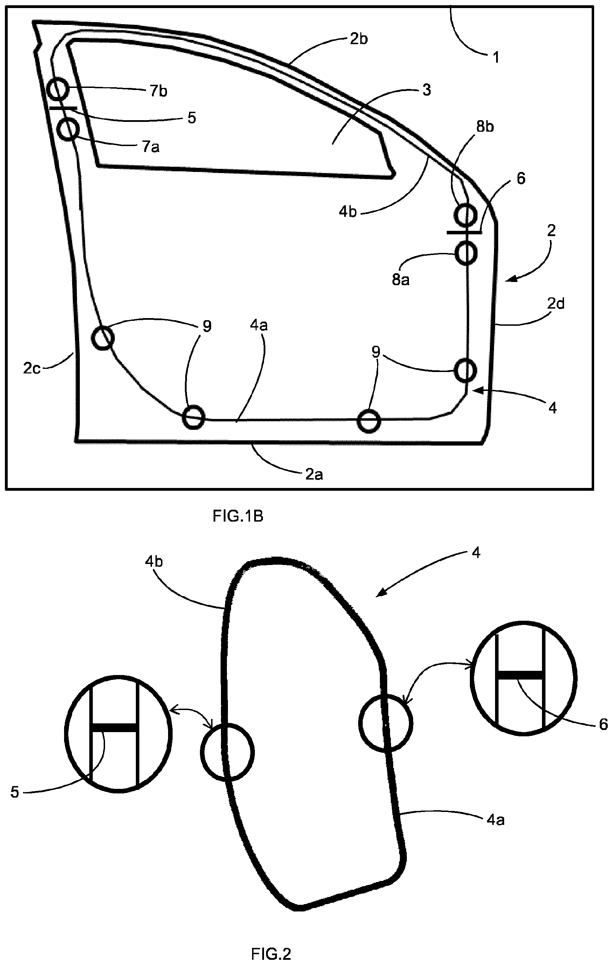

Le joint d'étanchéité 4, comme illustré sur la figure 2, comprend deux jonctions 5, 6 thermosoudées délimitant une première portion 4a et une deuxième portion 4b du joint d'étanchéité. Les jonctions 5, 6 sont des lignes de soudures obtenues lors de la fabrication du joint d'étanchéité : dans un premier temps, le joint d'étanchéité peut être fabriqué sous forme linéaire, puis dans un deuxième temps, il peut être assemblé sous forme annulaire par soudure des extrémités. Ces jonctions peuvent être des zones de fragilité du joint d'étanchéité. Dans le cas présent, la première portion 4a peut être fabriquée séparément de la deuxième portion 4b puis les deux portions 4a, 4b peuvent être assemblées le long des deux jonctions 5, 6. Selon une première variante, le joint d'étanchéité pourrait n'être constitué que d'une seule portion et être dépourvu de soudure. Il serait alors directement fabriqué sous forme annulaire, par exemple par moulage. Selon une deuxième variante, le joint d'étanchéité pourrait comprendre une unique jonction. Enfin selon une troisième variante, le joint d'étanchéité pourrait être fabriqué à partir de trois ou d'avantage de portions distinctes et autant de jonctions que de portions distinctes. Enfin, les jonctions pourraient être réalisées différemment que par thermosoudure, par exemple par collage ou par l'ajout d'un moyen mécanique de type manchon de liaison.

Le joint d'étanchéité est préférentiellement fabriqué à partir d'un matériau élastique tel que du caoutchouc. La longueur du joint d'étanchéité est susceptible de varier entre un état libre, avant montage, et un état monté.

La première portion 4a et la deuxième portion 4b forment deux portions complémentaires du joint d'étanchéité 4. Elles peuvent avoir une longueur voisine, c'est-à-dire que la longueur de la deuxième portion 4b est préférentiellement comprise entre la moitié et le double de la longueur de la première portion 4a. La première portion 4a est agencée dans une partie inférieure de la porte 2 tandis que la deuxième portion 4b est agencée dans une partie supérieure de la porte 2, notamment autour de la vitre 3. La deuxième portion 4b est donc au-dessus de la première portion 4a.

Le joint est fixé sur la porte 2 de sorte que les deux jonctions se positionnent chacune le long d'un bord latéral de la porte. La première jonction 5 est positionnée à environ mi-hauteur du bord latéral arrière 2c de la porte 2. La deuxième jonction 6 est positionnée vers le haut du bord latéral avant 2d de la porte 2. Les deux jonctions 5, 6 sont positionnées sensiblement sous la vitre, sensiblement au niveau d'une ceinture de caisse évoluant sous la vitre 3. Selon une variante de réalisation, la première jonction 5 est placée à proximité d'un angle formé entre le bord latéral arrière 2c et le bord supérieur 2b de la porte, comme cela est représenté sur la figure 1B.

Le joint d'étanchéité comprend un premier clip de fixation 7a et un deuxième clip de fixation 7b de part et d'autre de la première jonction 5. Le joint d'étanchéité comprend un troisième clip de fixation 8b et un quatrième clip de fixation 8a de part et d'autre de la deuxième jonction 6. Le premier clip de fixation 7a et le quatrième clip de fixation 8a sont positionnés dans la première portion 4a tandis que le deuxième clip de fixation 7b et le troisième clip de fixation 8b sont positionnés dans la deuxième portion 4b. A titre d'exemple, le premier et le deuxième clip de fixation peuvent être espacés d'environ 10 cm. De même, le troisième et le quatrième clip de fixation peuvent être espacés d'environ 10 cm. La première portion 4a comprend en outre une pluralité de clips de fixation supplémentaires 9 agencés entre le premier clip de fixation 7a et le quatrième clip de fixation 8a. Chaque clip de fixation 7a, 7b, 8a, 8b, 9 coopère avec un trou 7a', 7b', 8a', 8b', 9' correspondant dans la porte.

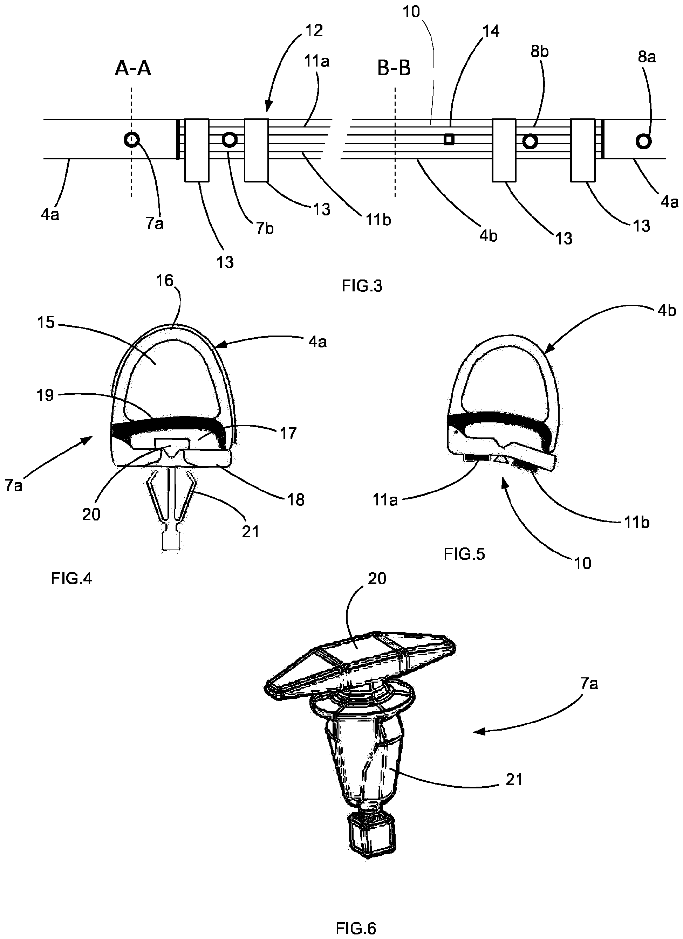

La deuxième portion du joint 4b du joint d'étanchéité comprend un moyen adhésif 10 particulièrement visible sur la figure 3. Le moyen adhésif s'étend sur toute la longueur de la deuxième portion 4b sous la forme de deux bandes autocollantes 11a, 11b uniformes et parallèles l'une à l'autre.

Avant le montage du joint d'étanchéité sur la porte, le moyen adhésif peut être recouvert d'une bande de protection 12, autrement dénommée « liner ». Cette bande de protection est retirée avant le montage de sorte à découvrir une surface collante qui pourra être appliquée contre la porte 2. Avantageusement, la bande de protection 12 comprend des languettes de préhension 13 pour faciliter son retrait lors de l'assemblage du joint sur la porte. Le joint d'étanchéité comprend également un perçage 14 pour une mise en dépression du volume contenue entre les deux bandes autocollantes 11a, 11b. Lors du montage du joint, une mise en dépression de ce volume permet de plaquer le joint d'étanchéité contre la surface sur laquelle il doit être collé. Ainsi, on peut obtenir un effort constant et uniforme pour coller le joint sur la porte. En remarque, selon le mode de réalisation illustré, le moyen adhésif est limité à la deuxième portion 4b : il ne s'étend pas à la première portion 4a.

La figure 4 est une vue en coupe du joint d'étanchéité au niveau de la section A-A indiquée sur la figure 3, c'est-à-dire au niveau d'un clip de fixation 7a. La figure 5 est une vue en coupe du joint d'étanchéité au niveau de la section B-B indiquée sur la figure 3, c'est-à-dire au niveau d'un moyen adhésif 10. La section transversale du joint d'étanchéité est sensiblement constante. En variante la première portion 4a et la deuxième portion 4b pourraient avoir des sections de forme différente. Le joint d'étanchéité comprend une première chambre 15 dont une paroi 16 est destinée à venir au contact de l'encadrement de porte lorsque la porte est en position fermée. En remarque, si le joint d'étanchéité était fixé à l'encadrement de porte, cette même paroi 16 serait destinée à venir au contact de la porte lorsqu'elle est en position fermée. La section de la paroi 16 a globalement un profil ovale. Lorsque la porte est en position fermée, la première chambre 15 est comprimée. Une ouverture d'évacuation de l'air contenu dans la première chambre 15 peut être prévue afin d'éviter un rebond de la porte lors de sa fermeture. Le joint d'étanchéité comprend également une deuxième chambre 17 dont une paroi 18 supporte les clips de fixation 7a, 7b, 8a, 8b, 9 et le moyen adhésif 10. La paroi 18 est également illustrée sur la figure 3. Les deux chambres 15, 17 sont séparée par une paroi commune 19. La paroi commune 19 est reliée au joint d'étanchéité uniquement par l'un de ses bords ce qui permet de réaliser une charnière entre la première chambre 15 et la deuxième chambre 17. Ainsi, le joint d'étanchéité a une flexibilité augmentée et la paroi 18 de la deuxième chambre peut être rendue accessible lors du montage ce qui permet d'exercer une pression directement sur les clips de fixation ou sur le moyen adhésif.

Tous les clips de fixation 7a, 7b, 8a, 8b, 9 peuvent être identiques. Un des clips de fixation 7a, également visible sur la figure 6 comprend une tête 20 noyée dans l'épaisseur de la paroi 18 et un corps 21 faisant saillie à l'extérieur du joint depuis la paroi 18. Le corps 21 comprend une partie élastique apte à se compresser pour favoriser son insertion dans un trou de la porte 2 et apte à se détendre une fois inséré dans le trou pour assurer la fixation du joint d'étanchéité. En variante, les clips de fixation pourraient être remplacés ou complété par tout autre moyen de fixation qui soit différent d'un moyen adhésif.

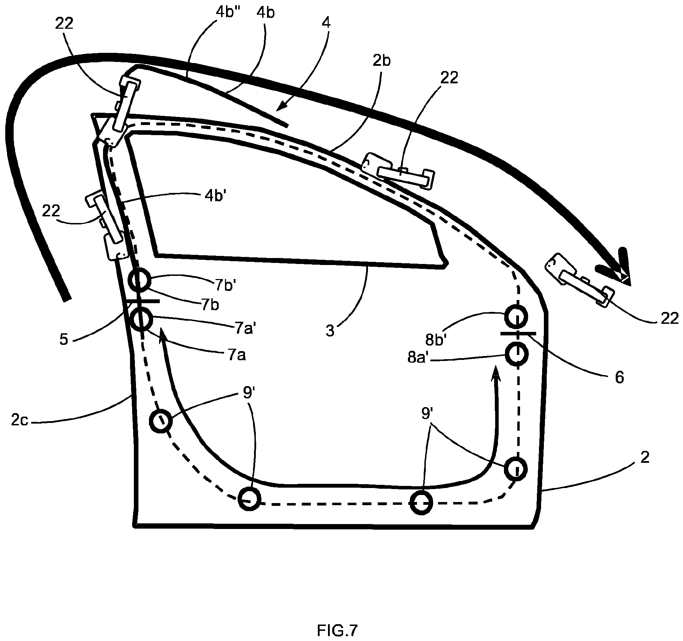

L'invention se rapporte également à un procédé de montage du joint d'étanchéité 4 sur la porte 2. Ce procédé est notamment illustré sur la figure 7. Préalablement au montage du joint d'étanchéité, on nettoie la surface de la porte destinée à accueillir l'adhésif. On déconditionne le joint d'étanchéité puis on réalise préférentiellement les étapes suivantes suivant leur ordre alphabétique de « a » jusqu'à « h » :
a) On fixe, autrement dit « on clipe », le premier clip de fixation 7a dans un premier trou 7a' de la porte.
b) on fixe le deuxième clip de fixation 7b dans un deuxième trou 7b' de la porte.
c) On retire la bande de protection 12 protégeant le moyen adhésif 10. A cet effet, un opérateur peut tirer sur la bande de protection par l'intermédiaire des languettes de préhension 13.
d) On colle une première partie 4b' de la deuxième portion 4b du joint d'étanchéité 4 sur la porte. La première partie 4b' s'étend de la première jonction 5 jusqu'en haut du bord latéral arrière 2c de la porte, c'est-à-dire jusqu'à l'angle formé entre le bord latéral arrière 2c et le bord supérieur 2b de la porte. Pour réaliser cette opération on utilise un outil 22 d'aide au montage. Cet outil 22 sert à appliquer une pression homogène sur le joint de manière à obtenir un collage uniforme et régulier. Cet outil 22 permet en outre de guider la deuxième portion 4b du joint d'étanchéité 4 afin d'amener cette dernière dans une position prédéterminée sur le bord de porte 2. Avantageusement, l'initialisation du collage du joint est réalisée le long d'une partie linéaire, c'est-à-dire qu'on ne commence pas à coller le joint dans une courbure. La mise en place de l'outil 22 et l'opération de collage en est facilitée.
e) On fixe le troisième clip de fixation 8b dans un troisième trou 8b' de la porte.
f) On fixe le quatrième clip de fixation 8a dans un quatrième trou 8a' de la porte.
g) On colle sur la porte une deuxième partie 4b" de la deuxième portion 4b du joint d'étanchéité, complémentaire de la première partie 4b' de la deuxième portion 4b du joint d'étanchéité 4. C'est-à-dire on colle la deuxième portion le long du bord supérieur 2b de la porte jusqu'à la deuxième jonction 6. Ce collage est obtenu en appliquant une pression sur le joint au moyen de l'outil 22.
h) On fixe les clips de fixations supplémentaires 9 agencés dans la première portion 4a du joint d'étanchéité. L'absence de moyen adhésif dans la première portion 4a facilite son montage.

Grâce à l'invention, le joint d'étanchéité peut être fixé sur une porte du véhicule sans recourir à des moyens de montage complexes et/ou volumineux. L'utilisation d'un moyen adhésif pour la fixation du joint d'étanchéité autour de la vitre 3 permet de s'affranchir des contraintes d'architecture et de volume du support sur lequel le joint est collé. Le constructeur automobile peut, par exemple, utiliser des montants autour des vitres qui soient plus fins ce qui améliore la visibilité et l'esthétique du véhicule. L'utilisation de clips de fixation pour fixer le joint d'étanchéité sur la partie inférieure de la porte n'est pas pénalisante car l'absence de vitre dans la partie inférieure permet d'intégrer plus facilement les trous pour la fixation des clips de fixation.

Les clips de fixations permettent d'indexer la position du joint d'étanchéité sur le contour de la porte. Comparativement avec un joint d'étanchéité intégralement fixé par un moyen adhésif, on évite ainsi un allongement localement excessif ou trop faible lors de la pose. Le joint d'étanchéité, une fois fixé sur la porte, est dépourvu de tension résiduelle ou bien comporte une tension résiduelle uniformément répartie sur toute sa longueur, ce qui améliore son aspect esthétique et/ou ses performances d'étanchéité.

La présence d'un clip de fixation de part et d'autre des deux jonctions 5, 6 permet d'éviter la transmission d'effort sur ces jonctions lors du montage. Lors de l'étape d, lors de laquelle on colle la première partie 4b', la tension le long du joint d'étanchéité est supportée par le premier clip de fixation 7a. Le risque de casser le joint au niveau de la première jonction est donc réduit. De même, lors de l'étape g lors de laquelle on colle la deuxième partie 4b", la tension le long du joint d'étanchéité est supportée par le troisième clip de fixation 8b. Le risque de casser le joint au niveau de la deuxième jonction est donc réduit.

Avantageusement, la fixation d'au moins un clip de fixation permet de tenir le joint d'étanchéité pendant qu'un opérateur retire la bande de protection 12. Ainsi, c'est la porte directement qui sert de support, autrement dit de portoir, pour faciliter le retrait de la bande de protection. Le joint d'étanchéité est ainsi maintenu en hauteur, à proximité directe de la surface contre laquelle il doit être collé. Le risque de salir le moyen adhésif 10 est donc réduit.

## Revendications

1. Joint d'étanchéité (4) annulaire destiné à être fixé à une porte (2) d'un véhicule (1) automobile ou à un encadrement de porte d'un véhicule (1) automobile, le joint comprend deux jonctions (5, 6) et deux clips de fixation (7a, 7b, 8a, 8b) de part et d'autre des deux jonctions (5, 6), **caractérisé en ce que**
- une première portion (4a) comprend au moins un clip de fixation (7a, 8a), une pluralité de clips de fixation supplémentaires (9) et aucun moyen adhésif,
- une deuxième portion (4b) comprend au moins un moyen adhésif (10), le moyen adhésif (10) s'étend sur toute la longueur de la deuxième portion (4b) sous la forme de deux bandes autocollantes (11a, 11b) uniformes et parallèles l'une à l'autre,
les deux jonctions (5, 6) délimitent la première portion (4a) de la deuxième portion (4b), la première portion (4a) et la deuxième portion (4b) formant deux portions complémentaires du joint d'étanchéité (4),
et **en ce que** le joint d'étanchéité comprend un perçage (14) destiné à une mise en dépression du volume contenu entre les deux bandes autocollantes (11a, 11b).

2. Joint d'étanchéité (4) selon la revendication 1, **caractérisé en ce que** la jonction (5) est une jonction thermosoudée, notamment **en ce que** les deux jonctions (5, 6) sont des jonctions thermosoudées.

3. Joint d'étanchéité (4) selon la revendication 1 ou 2, **caractérisé en ce que** la première portion (4a) est destinée à être fixée en dessous de la deuxième portion (4b), sur une porte (2) d'un véhicule (1) automobile ou sur un encadrement de porte d'un véhicule (1) automobile, notamment la deuxième portion (4b) étant destinée à contourner au moins partiellement une vitre (3) d'une porte (2) d'un véhicule (1) automobile, notamment la deuxième portion (4b) ayant une longueur voisine de la première portion (4a).

4. Joint d'étanchéité (4) selon l'une des revendications précédentes, **caractérisé en ce qu'**il comprend une bande de protection (12) recouvrant l'au moins un moyen adhésif (10), notamment une bande de protection (12) munie de languettes de préhension (13).

5. Joint d'étanchéité (4) selon l'une des revendications précédentes, **caractérisé en ce qu'**il comprend :
- une section transversale sensiblement constante, et/ou
- une première chambre (15) dont une paroi (16) est destinée à venir au contact d'une porte (2) si le joint d'étanchéité (4) est destiné à être fixé à un encadrement de porte ou à venir au contact d'un encadrement d'une porte si le joint d'étanchéité (4) est destiné à être fixé à une porte (2), et/ou
- une deuxième chambre (17) dont une paroi (18) supporte l'au moins un clip de fixation (7a, 7b, 8a, 8b, 9) et l'au moins un moyen adhésif (10).

6. Procédé de montage d'un joint d'étanchéité (4) selon l'une des revendications 1 à 5 sur une porte (2) d'un véhicule (1) automobile, **caractérisé en ce qu'**il comprend :
a) une étape de fixation d'un premier clip de fixation (7a) dans un premier trou (7a') de la porte (2),
b) une étape de fixation d'un deuxième clip de fixation (7b) dans un deuxième trou (7b') de la porte (2), le premier clip de fixation (7a) et le deuxième clip de fixation (7b) étant positionnés de part et d'autre d'une première jonction (5) du joint d'étanchéité (4),
c) une étape de retrait d'une bande de protection (12) protégeant le moyen adhésif (10),
d) une étape de collage sur la porte (2) d'une première partie (4b') de la deuxième portion (4b) du joint d'étanchéité (4) avec le moyen adhésif (10), en appliquant une pression homogène sur le joint au moyen d'un outil (22) d'aide au montage guidant la deuxième portion (4b) du joint d'étanchéité afin d'amener cette dernière dans une position prédéterminée sur un bord de porte,
e) une étape de fixation d'un troisième clip de fixation (8b) dans un troisième trou (8b') de la porte (2),
f) une étape de fixation d'un quatrième clip de fixation (8a) dans un quatrième trou (8a') de la porte (2), le troisième clip de fixation (8b) et le quatrième clip de fixation (8a) étant positionnés de part et d'autre d'une deuxième jonction (6) du joint d'étanchéité (4),
g) une étape de collage sur la porte (2) d'une deuxième partie (4b") de la deuxième portion (4b) du joint d'étanchéité (4), complémentaire de la première partie (4b') de la deuxième portion (4b) du joint d'étanchéité (4), en appliquant une pression sur le joint au moyen de l'outil (22),
h) Une étape de fixation de clips de fixations supplémentaires (9) agencés dans la première portion (4a) du joint d'étanchéité (4),
les étapes étant effectuées dans l'ordre alphabétique de a) jusqu'à h).

7. Véhicule (1) automobile **caractérisé en ce qu'**il comprend un joint d'étanchéité (4) selon l'une des revendications 1 à 5.

## Patentansprüche

1. Ringförmige Dichtung (4), die dazu bestimmt ist, an einer Tür (2) eines Kraftfahrzeugs (1) oder an einem Türrahmen eines Kraftfahrzeugs (1) befestigt zu sein, wobei die Dichtung zwei Verbindungsstellen (5, 6) und zwei Befestigungsclips (7a, 7b, 8a, 8b) auf beiden Seiten der beiden Verbindungsstellen (5, 6) umfasst, **dadurch gekennzeichnet, dass**
- ein erster Abschnitt (4a) mindestens einen Befestigungsclip (7a, 8a), mehrere zusätzliche Befestigungsclips (9) und kein Klebemittel umfasst,
- ein zweiter Abschnitt (4b) mindestens ein Klebemittel (10) umfasst, wobei sich das Klebemittel (10) in Form von zwei einheitlichen und zueinander parallelen Klebestreifen (11a, 11b) über die gesamte Länge des zweiten Abschnitts (4b) erstreckt, die beiden Verbindungsstellen (5, 6) den ersten Abschnitt (4a) vom zweiten Abschnitt (4b) abgrenzen, wobei der erste Abschnitt (4a) und der zweite Abschnitt (4b) zwei komplementäre Abschnitte der Dichtung (4) bilden, und dass die Dichtung eine Bohrung (14) umfasst, die dazu bestimmt ist, in dem zwischen den beiden Klebestreifen (11a, 11b) enthaltenen Volumen einen Unterdruck zu erzeugen.

2. Dichtung (4) nach Anspruch 1, **dadurch gekennzeichnet, dass** die Verbindungsstelle (5) eine thermisch verschweißte Verbindungsstelle ist, insbesondere dass die beiden Verbindungsstellen (5, 6) thermisch verschweißte Verbindungsstellen sind.

3. Dichtung (4) nach Anspruch 1 oder 2, **dadurch gekennzeichnet, dass** der erste Abschnitt (4a) dazu bestimmt ist, unterhalb des zweiten Abschnitts (4b) an einer Tür (2) eines Kraftfahrzeugs (1) oder an einem Türrahmen eines Kraftfahrzeugs (1) befestigt zu sein, wobei insbesondere der zweite Abschnitt (4b) dazu bestimmt ist, zumindest teilweise um eine Scheibe (3) einer Tür (2) eines Kraftfahrzeugs (1) herum zu verlaufen, wobei insbesondere der zweite Abschnitt (4b) eine an den ersten Abschnitt (4a) angenäherte Länge aufweist.

4. Dichtung (4) nach einem der vorangehenden Ansprüche, **dadurch gekennzeichnet, dass** sie einen Schutzstreifen (12) umfasst, der das mindestens eine Klebemittel (10) bedeckt, insbesondere einen mit Greiflaschen (13) versehenen Schutzstreifen (12).

5. Dichtung (4) nach einem der vorangehenden Ansprüche, **dadurch gekennzeichnet, dass** sie Folgendes umfasst:
- einen im Wesentlichen konstanten Querschnitt und/oder
- eine erste Kammer (15), deren eine Wand (16) dazu bestimmt ist, mit einer Tür (2) in Kontakt zu kommen, wenn die Dichtung (4) dazu bestimmt ist, an einem Türrahmen befestigt zu sein, oder mit einem Türrahmen in Kontakt zu kommen, wenn die Dichtung (4) dazu bestimmt ist, an einer Tür (2) befestigt zu sein, und/oder
- eine zweite Kammer (17), deren eine Wand (18) den mindestens einen Befestigungsclip (7a, 7b, 8a, 8b, 9) und das mindestens eine Klebemittel (10) trägt.

6. Verfahren zur Montage einer Dichtung (4) nach einem der Ansprüche 1 bis 5 an einer Tür (2) eines Kraftfahrzeugs (1), **dadurch gekennzeichnet, dass** es Folgendes umfasst:
a) einen Schritt des Befestigens eines ersten Befestigungsclips (7a) in einem ersten Loch (7a') der Tür (2),
b) einen Schritt des Befestigens eines zweiten Befestigungsclips (7b) in einem zweiten Loch (7b') der Tür (2), wobei der erste Befestigungsclip (7a) und der zweite Befestigungsclip (7b) auf beiden Seiten einer ersten Verbindungsstelle (5) der Dichtung (4) positioniert sind,
c) einen Schritt des Abziehens eines Schutzstreifens (12), der das Klebemittel (10) schützt,
d) einen Schritt des Anklebens eines ersten Teils (4b') des zweiten Abschnitts (4b) der Dichtung (4) mit dem Klebemittel (10) an der Tür (2) durch Ausüben eines gleichmäßigen Drucks auf die Dichtung mit Hilfe eines Montagehilfswerkzeugs (22), das den zweiten Abschnitt (4b) der Dichtung führt, um diesen in eine vorbestimmte Position an einer Türkante zu bringen,
e) einen Schritt des Befestigens eines dritten Befestigungsclips (8b) in einem dritten Loch (8b') der Tür (2),
f) einen Schritt des Befestigens eines vierten Befestigungsclips (8a) in einem vierten Loch (8a') der Tür (2), wobei der dritte Befestigungsclip (8b) und der vierte Befestigungsclip (8a) auf beiden Seiten einer zweiten Verbindungsstelle (6) der Dichtung (4) positioniert sind,
g) einen Schritt des Anklebens eines zum ersten Teil (4b') des zweiten Abschnitts (4b) der Dichtung (4) komplementären zweiten Teils (4b") des zweiten Abschnitts (4b) der Dichtung (4) an der Tür (2) durch Ausüben eines Drucks auf die Dichtung mit Hilfe des Werkzeugs (22),
h) einen Schritt des Befestigens zusätzlicher Befestigungsclips (9), die im ersten Abschnitt (4a) der Dichtung (4) angeordnet sind,
wobei die Schritte in alphabetischer Reihenfolge von a) bis h) ausgeführt werden.

7. Kraftfahrzeug (1), **dadurch gekennzeichnet, dass** es eine Dichtung (4) nach einem der vorangehenden Ansprüche umfasst.

## Claims

1. Annular seal (4) intended to be attached to a door (2) of a motor vehicle (1) or to a door frame of a motor vehicle (1), the seal comprising two junctions (5, 6) and two attachment clips (7a, 7b, 8a, 8b) on either side of the two junctions (5, 6), **characterized in that**
- a first portion (4a) comprises at least one attachment clip (7a, 8a), a plurality of additional attachment clips (9) and no adhesive means,
- a second portion (4b) comprises at least one adhesive means (10), the adhesive means (10) extending over the entire length of the second portion (4b) in the form of two self-adhesive strips (11a, 11b) which are uniform and parallel to one another,
the two junctions (5, 6) delimit the first portion (4a) from the second portion (4b), the first portion (4a) and the second portion (4b) forming two complementary portions of the seal (4), and **in that** the seal comprises a bore (14) intended to apply a vacuum to the volume contained between the two self-adhesive strips (11a, 11b) .

2. Seal (4) according to Claim 1, **characterized in that** the junction (5) is a thermally welded junction, in particular **in that** the two junctions (5, 6) are thermally welded junctions.

3. Seal (4) according to Claim 1 or 2, **characterized in that** the first portion (4a) is intended to be attached below the second portion (4b), to a door (2) of a motor vehicle (1) or to a door frame of a motor vehicle (1), in particular the second portion (4b) being intended to at least partially run around a window (3) of a door (2) of a motor vehicle (1), in particular the second portion (4b) having a length similar to the first portion (4a).

4. Seal (4) according to one of the preceding claims, **characterized in that** it comprises a protective strip (12) covering the at least one adhesive means (10), in particular a protective strip (12) provided with grip tabs (13).

5. Seal (4) according to one of the preceding claims, **characterized in that** it comprises:
- a substantially constant cross section, and/or
- a first chamber (15) of which a wall (16) is intended to come into contact with a door (2) if the seal (4) is intended to be attached to a door frame or to come into contact with a frame of a door if the seal (4) is intended to be attached to a door (2), and/or
- a second chamber (17) of which a wall (18) supports the at least one attachment clip (7a, 7b, 8a, 8b, 9) and the at least one adhesive means (10).

6. Method for mounting a seal (4) according to one of Claims 1 to 5 on a door (2) of a motor vehicle (1), **characterized in that** it comprises:
a) a step of attaching a first attachment clip (7a) in a first hole (7a') in the door (2),
b) a step of attaching a second attachment clip (7b) in a second hole (7b') in the door (2), the first attachment clip (7a) and the second attachment clip (7b) being positioned on either side of a first junction (5) of the seal (4),
c) a step of removing a protective strip (12) protecting the adhesive means (10),
d) a step of adhesively bonding a first part (4b') of the second portion (4b) of the seal (4) to the door (2) with the adhesive means (10), by applying a homogeneous pressure to the seal by means of a mounting assistance tool (22) guiding the second portion (4b) of the seal in order to bring the latter into a predetermined position on an edge of the door,
e) a step of attaching a third attachment clip (8b) in a third hole (8b') in the door (2),
f) a step of attaching a fourth attachment clip (8a) in a fourth hole (8a') in the door (2), the third attachment clip (8b) and the fourth attachment clip (8a) being positioned on either side of a second junction (6) of the seal (4),
g) a step of adhesively bonding to the door (2) a second part (4b ") of the second portion (4b) of the seal (4) that is complementary with the first part (4b') of the second portion (4b) of the seal (4), by applying a pressure to the seal by means of the tool (22),
h) a step of attaching additional attachment clips (9) arranged in the first portion (4a) of the seal (4),
the steps being carried out in the alphabetical order from a) to h) .

7. Motor vehicle (1), **characterized in that** it comprises a seal (4) according to one of Claims 1 to 5.
